# EUROPEAN PATENT APPLICATION

(11) **EP 2 620 935 A1**
(43) Date of publication of application: **31.07.2013**
(21) Application number: 11836061.9
(22) Date of filing: 17.10.2011
(51) Int. Cl.: G09B 23/34, G09B 23/32

(54) **MUSCLE MODEL FOR LEARNING AND EDUCATION METHOD USING SAME**

(30) Priority: 25.10.2010 JP 2010238956
(71) Applicant: Takasu, Shuhei, Aichi 444-0414 (JP); Kitada, Hideharu, Osaka 535-0013 (JP); Tanabe, Yoshihiko, Osaka 563-0032 (JP)
(72) Inventor: Takasu, Shuhei, Aichi 444-0414 (JP); Kitada, Hideharu, Osaka 535-0013 (JP); Tanabe, Yoshihiko, Osaka 563-0032 (JP)
(74) Representative: Manitz, Finsterwald & Partner GbR
(86) International application number: PCT/JP2011/073815
(87) International publication number: WO 2012/056925

(57) **Abstract**

A training aid for learning muscles providing a three dimensional way of easily understanding the shape of a muscle and the location and area of the origin/insertion of a muscle and a training method using the same are provided. The training aid for learning muscles comprises at least one bone member and at least one muscle member fixed removably to the bone member by the magnetic force of a magnet at its origin and insertion.

## Description

### TECHNICAL FIELD

The present invention relates to a training aid for muscles and a method for training using the same. More specifically, it relates to a training aid for learning the shapes and the origins/insertions of muscles used at health, medicine and welfare educational institutions such as medical schools, nursing schools and Judo therapist training facilities as well as health, medicine and welfare institutions such as hospitals and orthopedic clinics and a training method using the same..

### BACKGROUND ART

To understand skeletal muscles, it is necessary to memorize muscle names, the shapes of muscles, the locations and areas of origins/insertions, nerve supply and muscle actions, and especially, it is very important to precisely understand the shape and the origin/insertion of a muscle in order to figure out the condition of an injured muscle in a clinical setting.

As for how to understand these effectively, various ingenuities have been exercised in books, etc. For example, in the case of an anatomy book depicting all the muscles in one drawing, it is difficult to understand where each muscle starts (origin) and where it ends (insertion), therefore muscles are depicted with as minimum overlaps as possible such that the origin and insertion of each muscle can be seen as a whole. However, books do not provide three-dimensional ways of understanding and are not suitable for individuals, except specialized physicians who actually conduct autopsies and scholars, to understand the total presentation pattern of respective muscles including the information on its origin and insertion sites.

Computer graphic techniques in recent years allowed a three dimensional way of perceiving, but it is done only visually and does not allow tactile perception. However, it is needless to say that visual examination and palpation are of clinical importance.

What can actually be seen and touched includes a human anatomical model of skeletal muscles, which had a problem that the origin/insertion of a muscle could not be precisely understood because the shape of each muscle can not be precisely understood, including the cases where each muscle can not be seen as a whole at a site where muscles are overlapped, the origin/insertion site and the area of a muscle can not be seen because the muscle is fixed irremovably, and a muscle member is fixed at the sites other than its origin/insertion to a bone member with a fixture and so on (Patent Document 1).

### PRIOR ART DOCUMENT

### Patent Document

Patent Document 1: JP 2006-323103 A

### SUMMARY OF THE INVENTION

### PROBLEM TO BE SOLVED BY THE INVENTION

The present invention has been made in the light of the above conventional problem, and the object of the present invention is to provide a training aid for easy understanding of the shape and the origin/insertion of each muscle and a training method using and the same.

### MEANS TO SOLVE THE PROBLEM

The training aid for learning muscles of the present invention comprises at least one bone member and at least one muscle member attached at its origin and insertion removably to the bone member by the magnetic force of a magnet.

In addition, it is preferred that the muscle member has a shape similar to a human muscle and the bone member has a shape similar to a human bone.

In addition, it is preferred that either one of the origin of the muscle member and the bone member connected to the origin is provided with a magnet, while the other one is provided with a ferromagnet attracted to the magnet or a magnet attracting and attracted to the magnet, and that either one of the insertion of the muscle member and the bone member connected to the insertion is provided with a magnet, while the other one is provided with a ferromagnet attracted to the magnet, or a magnet attracting and attracted to the magnet.

In addition, it is preferred that the training aid is further provided with a attaching panel and the attaching panel is provided with ferromagnets attracted to the magnets at the origin and insertion of the muscle member or magnets attracting and attracted to the magnets, or magnets attracting the ferromagnets at the origin and insertion.

In addition, it is preferred that the attaching panel has an illustrated muscle thereon corresponding to the muscle member and that the muscle member is attached to the attaching panel at its origin and insertion in a manner to match the illustrated muscle on the attaching panel.

The present invention relates to a training method for muscles using the above training aid.

### EFFECTS OF THE INVENTION

According to the present invention, by structuring a bone member and a muscle member to be removable at its origin and insertion, a status similar to the shape of an actual human muscle is reproduced so that the shape of a human muscle, and the location and area of the origin/insertion of the muscle can be understood visually in a three-dimensional way and understood tactilely. Moreover, by structuring the muscle member and the bone member to be removable by the magnetic force of a magnet, a simple structure is ensured without using a complicate mechanism, making them easy to handle and hard to break. Moreover, by structuring the muscle member and the bone member to be removable by the magnetic force of a magnet, the muscle member can be mounted at a region where it could not be mounted by inserting a conventional fixing member in a form of a projection into a concave portion. Therefore, the muscle member and the bone member can be mounted by the magnetic force of a magnet even at the origin facing downward to the lower part of a human body, for example, the origin of a short head of biceps brachii. Moreover, for example, at the origin of a long head of biceps brachii located between bones, a conventional fixing member in a form of a projection cannot be fixed because fingers do not fit in when trying to insert it into the concave portion, and thus there is no other way but to fix it to the sites other than the original origin, while in the present invention, the magnetic force of the magnet allows the ends of the muscle member to slide between bones so that a muscle member can be mounted at its exact origin to the bone member. In this manner, according to the present invention, even if it is difficult to fix a muscle member at the location corresponding to the origin/insertion of the muscle of an actual human body, the muscle member and the bone member are allowed to be removable by the magnetic force of the magnet so that the muscle member can be fixed at the exact location of the origin/insertion.

Moreover, muscle members structured in a manner to be attachable to and removable from the attaching panel enable the understanding of each of various muscles with their muscle name, nerve supply and muscle actions, etc. linked to the shapes of the muscles, the location and area of the origin/insertion, for example, by indicating the muscle names, nerve supply, muscle actions and the like on the fixing panel.

Furthermore, the training method for muscle shapes of the present invention can provide opportunities for the ones, except specialized physicians who actually conduct autopsies and scholars, to understand the shapes and the origins/insertions of muscles visually in a three-dimensional way and to understand them tactilely, and raise the level of understanding by health, medicine and welfare professionals as a whole so as to contribute to the improvement in health, medicine and welfare techniques.

### BRIEF DESCRIPTION OF THE DRAWINGS

(FIG. 1) A schematic back view of a training aid for learning muscles according to the first embodiment of present invention, being a view of a supraspinatus member as being fixed.
(FIG. 2) A view of the training aid of Fig. 1 with the supraspinatus member removed therefrom.
(FIG. 3) A schematic view of the supraspinatus member of Fig. 1.
(FIG. 4) A schematic sectional view showing the fixation status of a scapula member and the supraspinatus member of Fig. 1 at its origin.
(FIG. 5) A schematic sectional view showing the fixation status of a humerus member and the supraspinatus member of Fig. 1 at its insertion.
(FIG. 6) A schematic back view of the training aid for learning muscles according to the first embodiment of present invention, being a view of an infraspinatus member as being fixed.
(FIG. 7) A view of the training aid of Fig. 6 with the infraspinatus member removed therefrom.
(FIG. 8) A schematic view of the infraspinatus member of Fig. 6.
(FIG. 9) A schematic back view of the training aid for muscles according to the first embodiment of the present invention, being a view of a teres minor member as being fixed.
(FIG. 10) A view of the training aid of Fig. 9 with the teres minor member removed therefrom.
(FIG. 11) A schematic view of the teres minor member of Fig. 9
(FIG. 12) A schematic explanatory view a fixing panel used for the training aid for learning muscles according to the first embodiment of the present invention.
(FIG. 13) A view of the fixing panel of Fig. 12 with muscle members fixed thereto.
(FIG. 14) A schematic explanatory view of the training aid for muscles according to the second embodiment of the present invention, being a view of a dorsal aspect of a bone member of a middle finger on right hand.
(FIG. 15) A view corresponding to Fig. 14, being a view of a palmar aspect of the bone member of a middle finger on right hand.
(FIG. 16) A view corresponding to Fig. 14, being a side view of the bone member of a middle finger on right hand.
(FIG. 17) A view corresponding to Fig. 14, being a view of a dorsal aspect of a common digital extensor tendon member of a middle finger on right hand as being fixed.
(FIG. 18) A view corresponding to Fig. 15, being a view of a palmar aspect of a superficial digital flexor tendon member and a deep digital flexor tendon member of a middle finger on right hand as being fixed.
(FIG. 19) A view corresponding to Fig. 16, being a side view of the common digital extensor tendon member, the superficial digital flexor tendon member and the deep digital flexor tendon member of a middle finger on right hand as being fixed.
(FIG. 20) A schematic sectional view of an origin magnet member of Fig. 14.
(FIG. 21) A view for explaining the regions where the training aid for learning muscles according to the third embodiment of the present invention is used.
(FIG. 22) A schematic view of the training aid for learning muscles according to the third embodiment of the present invention.

### EMBODIMENT FOR CARRYING OUT THE INVENTION

The training aid for learning muscles according to the embodiments of the present invention will be described below in details in accordance with the attached drawings.

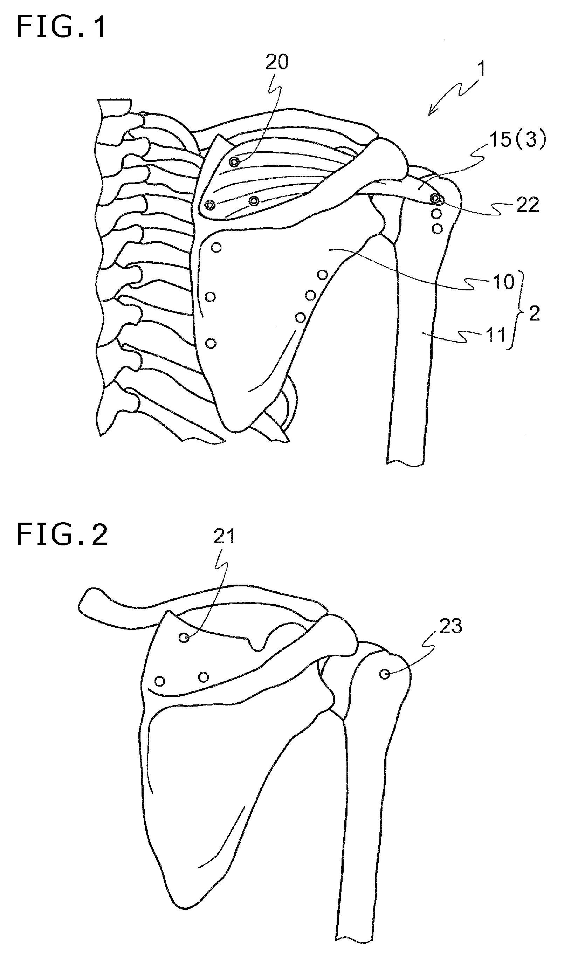

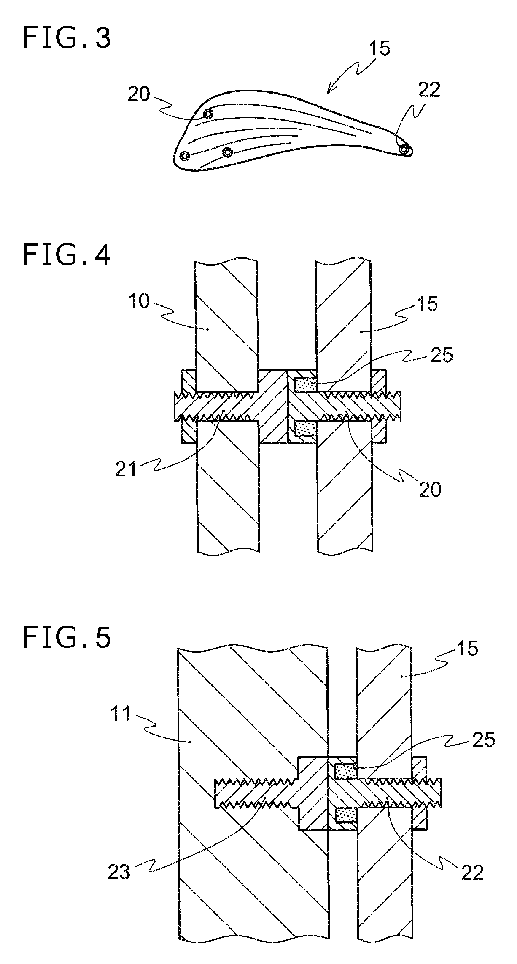

Fig. 1 is a schematic back view of the training aid for learning muscles according to the first embodiment of the present invention with a supraspinatus member fixed thereto. Fig. 2 is a view of the training aid of Fig. 1 with the supraspinatus member removed therefrom. Fig. 3 is schematic view of the supraspinatus member of Fig. 1.

As shown in Figs. 1-3, the training aid for learning muscles according to the first embodiment of the present invention (hereinafter referred to as training aid 1) is an anatomical model of a human upper body, and comprises a bone member 2 comprising at least a humerus member 11 and a scapula member 10. It is preferred that each of these bone members 2 has a shape and arrangement relationship similar to a human bone from the viewpoint of understanding the shape of an actual muscle. Namely, it is preferred that the scapula member 10 and the humerus member 11 respectively have shapes similar to human scapula and humerus, and that a head of the humerus member 11 and a glenoid fossa of the scapula member 10 are connected movably at a site corresponding to a human shoulder joint (scapulohumeral joint). In this regard, the training aid 1 can be an anatomical model of a human whole body or can be an anatomical model of a partial body, or can be a simplified version of an anatomical model of a human body.

In addition, it is preferred that the bone members 2 structured in such a manner have the same movability range as the range of motion of a human. This allows the same movement as a human to be reproduced on the training aid 1. It is preferred that respective bone members 2 are movably coupled to one another at sites corresponding to human joints by wires, movable fixtures, magnets and magnetic material, springs or rubbers, etc.

Material of the bone member 2 is not especially limited as long as it can reproduce the texture of human bones, and it is preferred that it is made of metal such as stainless, iron, copper and aluminum because they are easily processed into the shapes of human bones, and it is preferred that it is made of synthetic resin such as polyvinyl chloride (PVC), FRP or wood because they are light in weight.

A supraspinatus member 15, a muscle member 3, is attached to the scapula member 10 and the humerus member 11 as shown in Figs. 1 and 2. The supraspinatus member 15 has a shape similar to a human supraspinatus. In addition, material of the muscle member 3 is not especially limited as long as it reproduces human muscles and has a texture similar to human muscles, but it is preferred that it is made of rubber material which is soft when touched and the feel of which is similar to human muscles.

The supraspinatus member 15 has plural origin magnet members 20 fixed thereto at its origin on the side contacting the scapula member 10. While the scapula member 10 has plural origin members 21 made of ferromagnets fixed at the locations corresponding to the origin magnet members 20. These origin magnet members 20 of the supraspinatus member 15 attract the origin members 21 of the scapula member 10 such that the both are attached removably to each other.

In addition, the supraspinatus member 15 has an insertion magnet member 22 fixed thereto at its insertion on the side contacting the humerus member 11. While the humerus member 11 has an insertion member 23 made of a ferromagnet fixed thereto at the location corresponding to the insertion magnet member 22. This insertion magnet member 22 of the supraspinatus member 15 attracts the insertion member 23 of the humerus member 11 such that both are attached removably to each other. Accordingly, the supraspinatus member 15 can be attached removably at its origin and insertion to the scapula member 10 and the humerus member 11 respectively.

Fig. 4 is a schematic sectional view showing the attached status of the scapula member and the supraspinatus member of Fig. 1 at the origin. Fig. 5 is a schematic sectional view showing the attached status of the humerus member and the supraspinatus member of Fig. 1 at the insertion.

As shown in Fig. 4, the origin magnet member 20 is a screw comprising a circular screw head, a shaft and a locknut and is inserted and then screwed into a hole formed on the supraspinatus member 15. A ring-shaped concave portion is formed inside the screw head, where a ring-shaped magnet 25 is embedded. Accordingly, the origin magnet member 20 attracts the origin member 21 made of a ferromagnet which will be described below. In addition, because the ring-shaped magnet 25 is covered by an outer wall, i.e. the screw head made of metal, it does not break when attracting and contacting the origin member 21.

The upper surface of the screw head of the origin magnet member 20 is formed to be flat, and this surface faces the scapula member 10. Accordingly, the projection from the origin magnet member 20 is kept from being distinct, allowing it to easily attract and be fixed to the origin members 21 described below. It is preferred for security reasons that the screw end does not project from the locknut of the origin magnet member 20, on the surface opposite to the scapula member 10. In this regard, the magnet at the screw head is not limited to the one provided inside the screw head. The origin magnet member 20 is not limited to a screw and it can also be a magnet itself, and can also be fixed to the muscle member 3 by adhesive, etc.

The kind of the magnet to be used can be permanent magnets such as a ferrite magnet or a neodymium magnet, but it is preferred to use a neodymium magnet among all. The magnetic force of the magnet is not especially limited, but it is preferably 500-7700 gauss, more preferably 1000-7500 gauss, and most preferably 1500-7500 gauss.

In addition, the origin member 21 is a screw, too, which is inserted and then screwed into a hole formed on the scapula member 10. In addition, the upper surface of the screw head is formed to be flat, and this surface faces the supraspinatus member 15. The origin member 21 is made of ferromagnetic iron, and the upper surface of the screw head formed to be flat is attracted to and attached to the upper surface of the origin magnet member 20. It is preferred for safety reasons that the screw end does not project from the locknut of the origin members 21 on the surface opposite to the supraspinatus member 15. The ferromagnet is not limited to iron, and ferromagnetic stainless steel can also be used. In this regard, it is preferred that a convex portion is formed on either one of the upper surface of the screw head of the origin magnet member 20 and the upper surface of the screw head of the origin members 21 and a concave portion is formed on the other one, because concavity and convexity engagement ensures the positioning of both of them. The origin member 21 is not limited to a screw, either, as with the origin magnet member 20.

As shown in Fig. 5, the insertion magnet member 22 is fixed to the supraspinatus member 15 basically in the same manner as the origin magnet member 20, and thus it will not be described repeatedly. On the other hand, the insertion member 23 is fixed to the humerus member 11 by embedding an anchor bolt, used as the insertion member 23, into a bolt hole formed on the humerus member 11, because the humerus member 11 is thick. Here, it is preferred that the hole is formed such that the bolt head of the insertion member 23 can also be embedded and the upper surface of the bold head and the surface of the humerus member 11 form a flat plane, because this would ensure safety and easiness in handling due to reduced size. In such a manner, the size can be reduced by using a screw or bolt as the origin magnet member 20, the origin members 21, the insertion magnet member 22 and the insertion member 23, such that a connection status same as the origin/insertion of human muscles can be precisely reproduced.

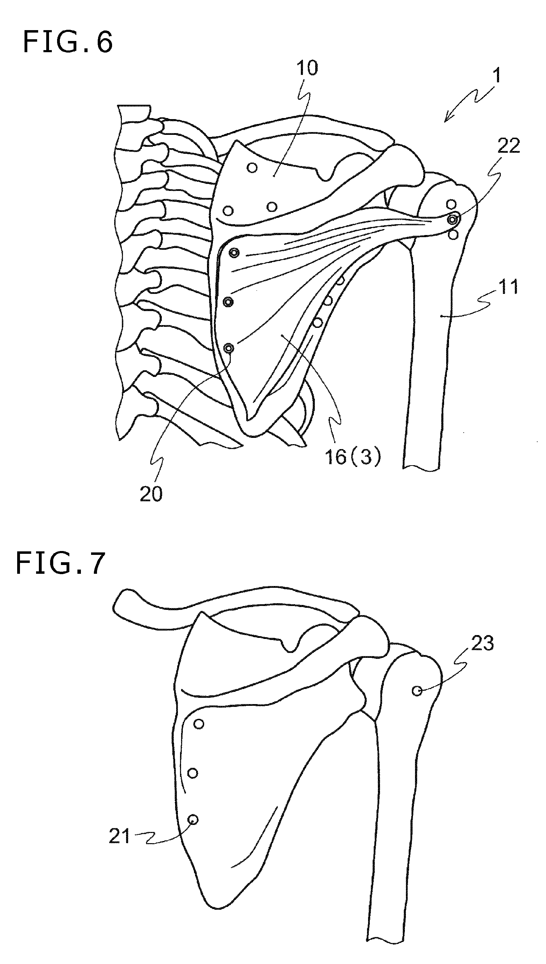

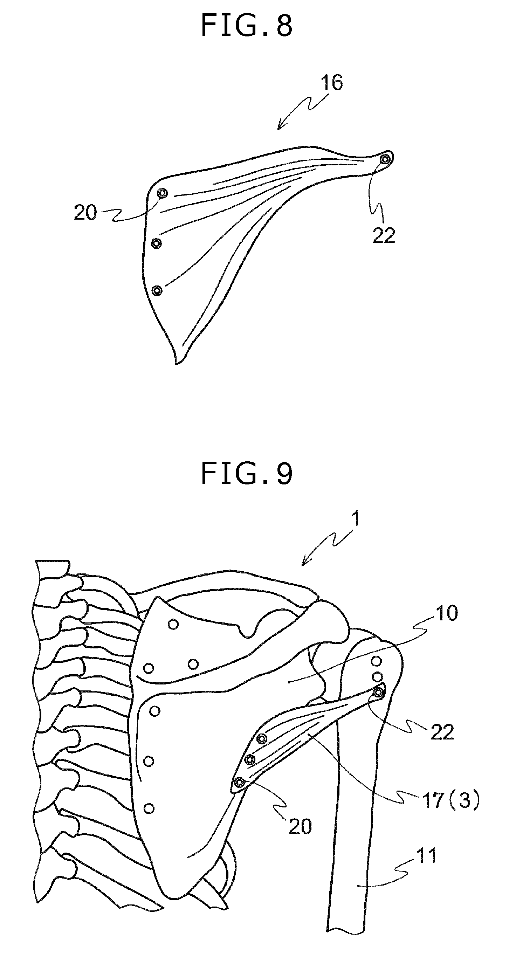

Fig. 6 is a schematic back view of the training aid for muscles according to the first embodiment of the present invention, with an infraspinatus member attached thereto, Fig. 7 is a view of the training aid of Fig. 6 with the infraspinatus member removed therefrom, and Fig. 8 is a schematic view of the infraspinatus member of Fig. 6.

As shown in Figs. 6-8, the infraspinatus member 16, a muscle member 3, is attached to the scapula member 10 and the humerus member 11, and the basic structure is same as the case of the supraspinatus member 15 which has been explained before, and thus it will not be explained repeatedly.

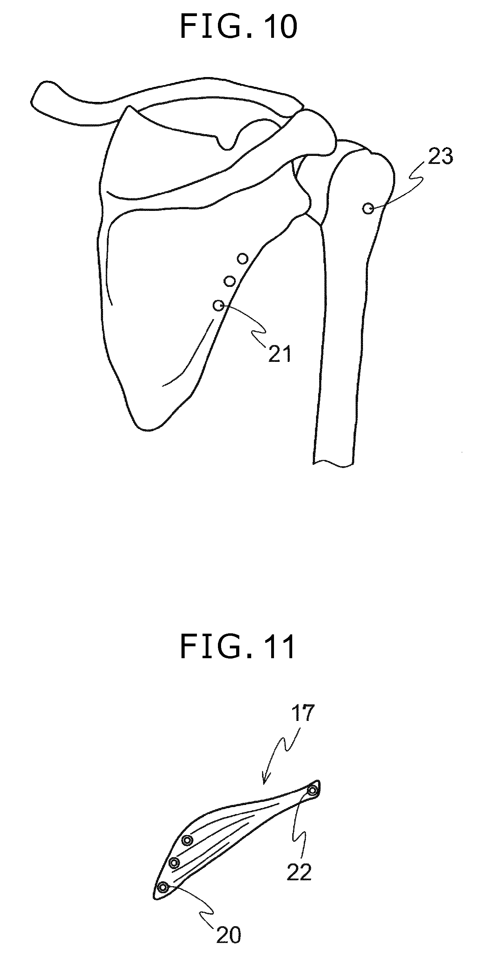

Fig. 9 is a schematic back view of the training aid for learning muscles according to the first embodiment of the present invention, with a teres minor member attached thereto, Fig. 10 is a view of the training aid of Fig. 9 with the teres minor member removed therefrom, and Fig. 11 is a schematic view of the teres minor member of Fig. 9.

As shown in Figs. 9-11, the teres minor member 17, a muscle member 3, is attached to the scapula member 10 and the humerus member 11, and the basic structure is same as the case of the supraspinatus member 15 which has been explained before, and thus it will not be explained repeatedly.

By structuring the bone members and the muscle members to be removable at the origin and insertion in this manner, a status similar to the shape of an actual human muscle (especially, the location and area of the origin/insertion) can be reproduced, such that the shape of a human muscle and the location and area of the origin/insertion of a muscle can be understood visually in a three dimensional way and understood tactilely. In addition, the muscle members and the bone members structured to be removable by the magnetic force of a magnet ensure a simple structure without using a complicate mechanism, which is easy to handle and hard to break.

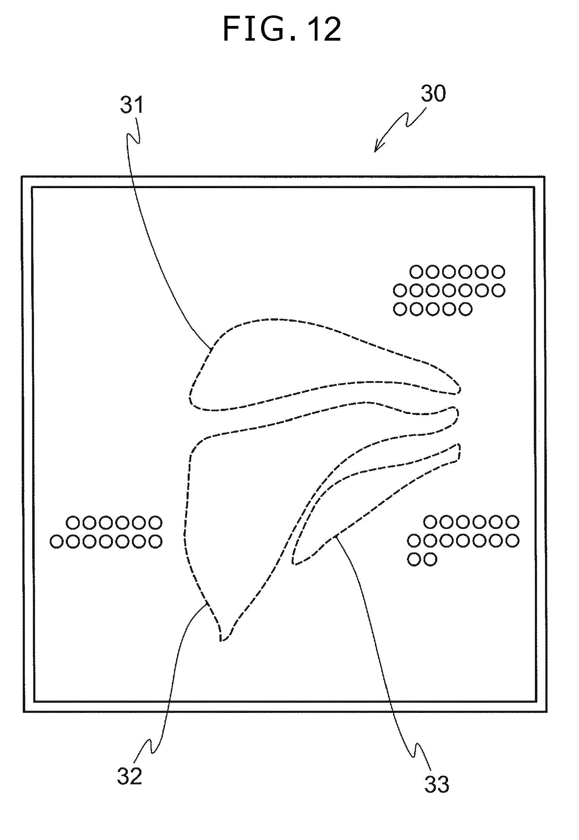

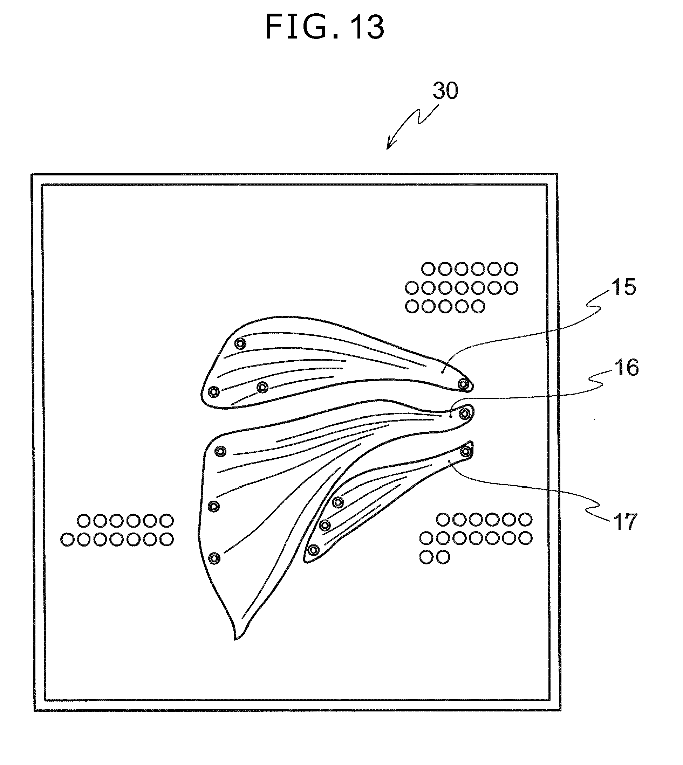

Fig. 12 a schematic explanatory view of a attaching panel used for the training aid for learning muscles according to the first embodiment of the present invention, and Fig. 13 is a view of the attaching panel of Fig. 12 with muscle members attached thereto.

As shown in Fig. 12, the attaching panel 30 is a steel whiteboard which magnets stick to. A schematic view illustrating a supraspinatus, infraspinatus and teres minor (reference numbers 31, 32, 33) is shown on the surface of the attaching panel 30. It is preferred that a view of a human body is illustrated in more details because it makes it easy to visually understand the arrangement of muscles, and it is more preferred that the attaching panel 30 has muscle names, nerve supply and muscle actions written on it because it enables more understanding of muscles. From the viewpoint of preservation and appearance, the attaching panel 30 can be provided with the capability of storing and displaying if covered with a cover having a transparent plate.

The above described supraspinatus member 15, infraspinatus member 16 and teres minor member 17 are attached by the magnetic force of the magnets in such a manner to be aligned with the locations corresponding to the drawings of respective muscles illustrated on the attaching panel 30 as shown in Fig. 13. In this regard, in case the origin magnet member 20 and the insertion magnet member 22 of the muscle member 3 is configured to comprise magnetic material, the muscle member 3 can be attached to the attaching panel 30 if magnets are mounted to the surface of the attaching panel 30.

By structuring the muscle members to be attachable to and removable from the attaching panel in this manner, with muscle names, nerve supply, muscle actions and the like written on the attaching panel, each of various muscles can be understood with muscle names, nerve supply, muscle actions and the like linked to the shapes of the muscles and the location and area of the origin/insertion. In addition, because the total number of muscle members is about 650 if used for respective muscles of a whole body, it is hard to identify a muscle member if removed and organizing them is troublesome. However, by providing the attaching panel covering respective muscle members and allowing the muscle members to be attachable to and removable from the attaching panel, it is possible to organize the muscle members easily and to learn on the attaching panel, as well.

Furthermore, in the first embodiment, it is possible to provide a training method on the shapes and the origins/insertions of muscles by using the training aid 1. The way of using the training aid 1 is not especially limited, and it can be freely used in places of education, etc. This training method provides opportunities for the ones except specialized physicians who actually conduct autopsies and scholars to understand the shapes and the origins/insertions of muscles visually in a three dimensional way and to understand them tactilely, and raises the level of understanding by health, medicine and welfare professionals as a whole so as to contribute to the improvement in health, medicine and welfare techniques.

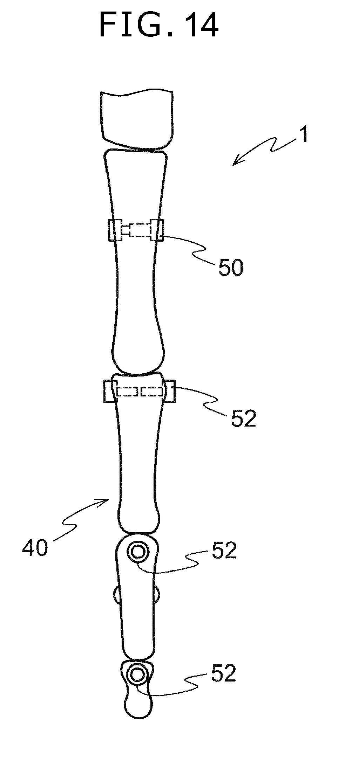

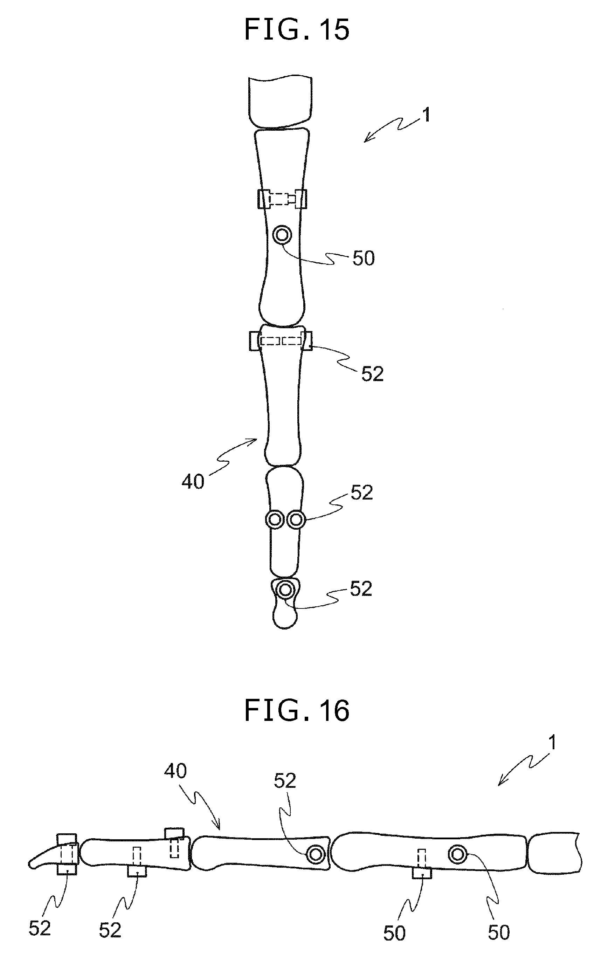

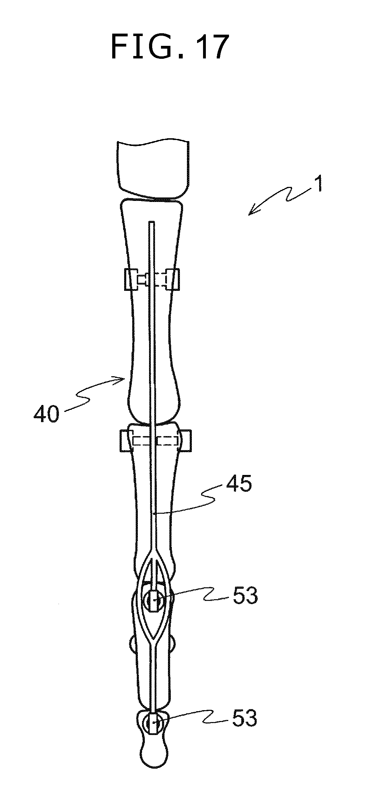

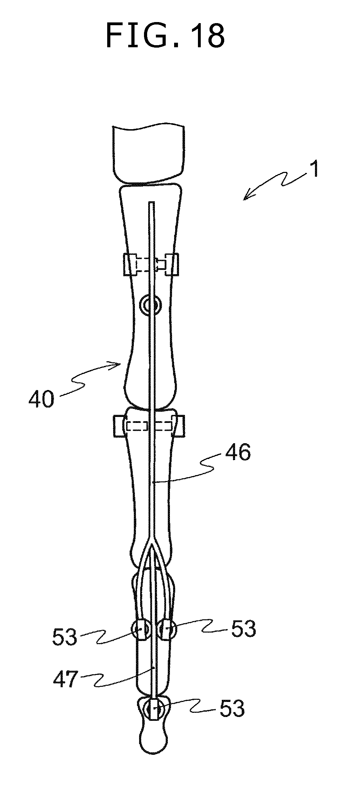

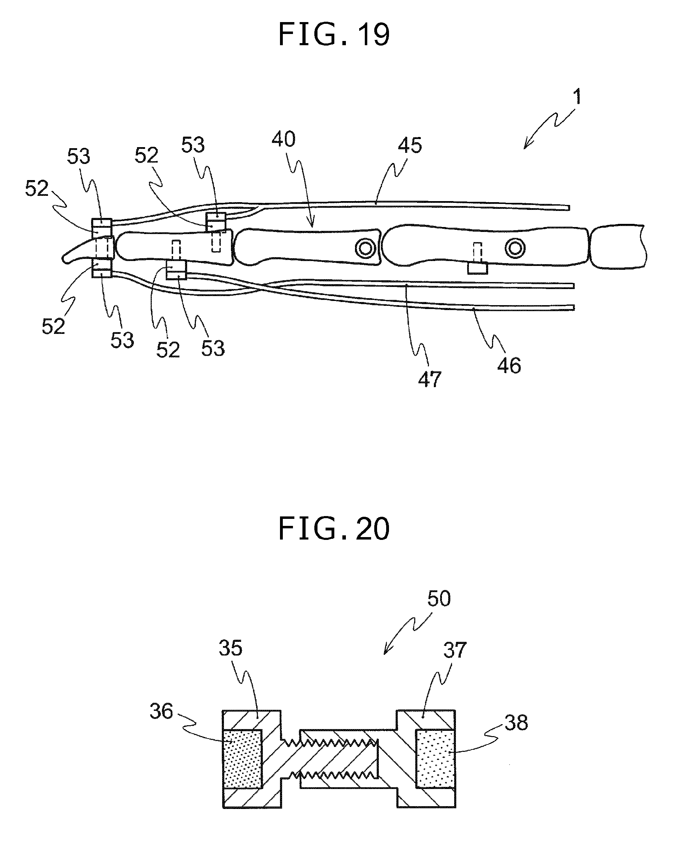

Fig. 14 is a schematic explanatory view of the training aid for learning muscles according to the second embodiment of the present invention, being a view of a dorsal aspect of a bone member of a middle finger on right hand, Fig. 15 is a view corresponding to Fig. 14, being a view of a palmar aspect of the bone member of the middle finger on right hand, Fig. 16 is a view corresponding to Fig. 14, being a side view of the bone member of the middle finger on right hand, Fig. 17 is a view corresponding to Fig. 14, being a view of a dorsal aspect of a common digital extensor tendon member of the middle finger on right hand as being attached, Fig. 18 is a view corresponding to Fig. 15, being a view of a palmar aspect of a superficial digital flexor tendon member and a deep digital flexor tendon member of the middle finger on right hand as being attached, Fig. 19 is a view corresponding to Fig. 16, being a side view of the common digital extensor tendon member, superficial digital flexor tendon member and deep digital flexor tendon member of the middle finger on right hand as being attached, and Fig. 20 is a schematic sectional view of the origin magnet member of Fig. 14.

As shown in Fig. 14-Fig. 19, the training aid 1 according to the second embodiment and a training method using the training aid 1 are basically same as the one according to the first embodiment explained above, and thus they will be described with a focus on their differences. The second embodiment is different from the one according to the first embodiment in that the structure of the bone member 2 and the muscle member 3 is applied to the bone member 40 of the middle finger on right hand as well as a common digital extensor tendon member 45, a superficial digital flexor tendon member 46 and a deep digital flexor tendon member 47.

In addition, it is different from the one according to the first embodiment as well in that for example, an origin magnet member 50 and an insertion magnet member 52 are fixed to the bone member 40 as shown in Fig. 14, and an origin member (not illustrated) and an insertion member 53 are fixed to the common digital extensor tendon member 45, a muscle member, as shown in Fig. 17.

As shown in Fig. 20, the origin magnet member 50 is made by screwing a screw 35 and a screw 37 with each other, and is fixed to the bone member 40 by inserting respective screw ends from both openings of a hole formed on the bone member 40 and screwing them with each other. Both the screw 35 and screw 37 have a concave portion formed on their screw heads, in which magnets 36, 38 are embedded and fixed. Where the bone member 40 is thicker, the origin magnet member 50 is fixed to the bone member 40 by forming a screw hole on the bone member 40 beforehand and screwing the screw 35 into the screw hole. The structure of the insertion magnet member 52 as well as how to fix it are basically same as the case of the origin magnet member 50, and thus they will not be explained repeatedly.

While, as shown in Fig. 17, the origin member (not illustrated) and the insertion member 53 are thin films made of ferromagnetic iron and wrap around the common digital extensor tendon member 45, a muscle member, to be fixed thereto. With such structure, the size can be reduced to the millimeters, and even in a thin portion such as a tendon of a finger, the bone member and the muscle member can be attached with each other at its origin and insertion by a magnet attracting and fixing a ferromagnet. A superficial digital flexor tendon member 46 and a deep digital flexor tendon member 47 have basically the same structures as the common digital extensor tendon member 45, and thus they will not be explained repeatedly.

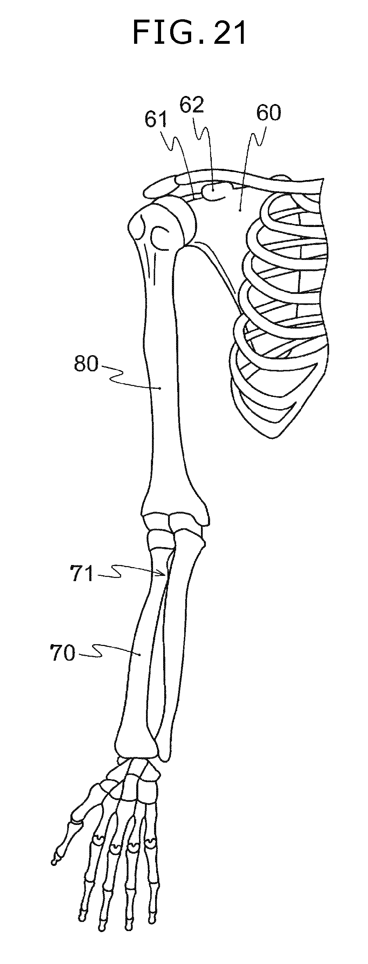

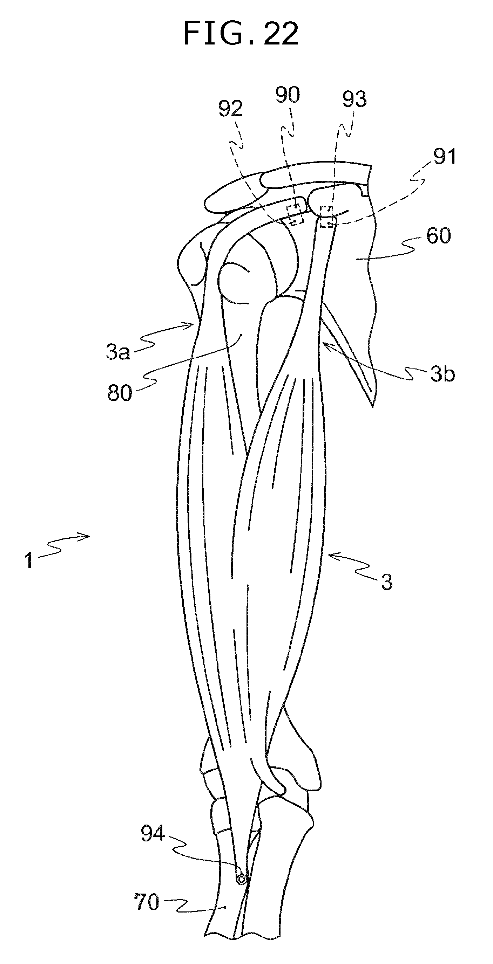

Fig. 22 is a schematic explanatory view of a training aid for learning muscles according to the third embodiment, Fig. 21 is a view showing the bone member before the training aid for learning muscles of the third embodiment is mounted thereto. As shown in Fig. 22, the training aid 1 according to the third embodiment and a training method using the training aid 1 is basically same as the ones according to the first embodiment explained above and thus they will be explained with a focus on their differences. The third embodiment is different from the ones according to the first and second embodiments in that the structure of the bone member 2 and the muscle member 3 is applied to a scapula member 60 and a radius member 70. The third embodiment is different from the ones according to the first and second embodiments as well in that the muscle member 3 is a muscle member 3 resembling biceps brachii in the third embodiment.

As shown in Fig. 21, the scapula member 60 has a supraglenoid tubercle 61 serving as an origin of a long head of biceps brachii and a coracoid process 62 serving as an origin of a short head of biceps brachii in the same manner as an actual scapula of a human body. Biceps brachii insert on a radial tuberosity 71 of a radius member 70 shown in Fig. 21. Here, a humerus member corresponding to a humerus in Fig. 21 is indicated by a reference number 80. As shown in Fig. 21 and Fig. 22, the biceps brachii originate on a supraglenoid tubercle 61 situated in a small space between bones and at the lower side of a coracoid process 62 facing downward to the lower part of a human body. Therefore, if a conventional fixing member in a form of a projection is to be mounted by inserting it into a concave portion, because fingers trying to insert the fixing member can not fit in between bones at a supraglenoid tubercle 61, the fixing member can not be mounted. In addition, if a hole to insert the fixing member thereinto is provided at the lower side of the coracoid process 62, inserting the fixing member into the hole causes the muscle member to fall down by gravity and thus the fixting member comes off from the hole.

As shown in Fig. 22, the muscle member 3 corresponding to biceps brachii has a long head part 3a corresponding to the long head and a short head part 3b corresponding to the short head. At the top ends of the long head part 3a and the short head part 3b, origin magnet members 90, 91 are provided respectively, and at the supraglenoid tubercle 61 and at the lower side of the coracoid process 62, origin magnet members 92, 93 are provided respectively as well. At the other end of the muscle member 3, an insertion magnet member 94 is provided, and at the radial tuberosity 71, an insertion magnet member (not illustrated) is provided. The structures of the origin magnet members 90, 91, 92, 93 and the insertion magnet member 94 are basically same as the ones according to the first and second embodiments, and thus they will not be explained repeatedly.

As shown in Fig. 22, for example, even at an origin facing downward to the lower part of a human body such as the origin of the short head of biceps brachii, the muscle member 3 and the bone member 2 can be mounted easily by the magnetic force of a magnet. In addition, for example, even in the case of the origin situated between bones such as the origin of the long head of biceps brachii, the muscle member 3 can be mounted to the bone member 2 at the correct origin by the magnetic force of a magnet by sliding the end of the muscle member 3 between bones. Accordingly, even if it is difficult to attach the muscle members 3 at the location corresponding to the origin/insertion of muscles of an actual human body, the muscle member 3 can be fixed at the correct location of the origin/insertion by allowing the muscle member 3 and the bone member 2 to be removable by the magnetic force of a magnet.

By the way, in the above first embodiment, a magnet was used for the muscle member and a ferromagnet was used for the bone member, but not limited thereto. Conversely, a ferromagnet may be used for the muscle member and a magnet may be used for the bone member in the same manner as the second embodiment, or magnets may be used for both of them and be arranged in such a manner to allow them to attract each other. In addition, for a muscle having a large attaching area and a high weight, the magnet size and the magnetic force can be changed appropriately by using a bigger magnet, the one with a strong magnetic force, and the like. In addition, when using multiple muscle members at a region with densely-located origins/insertions, a magnet or a magnetic material of a smaller size can be used as well.

In addition, bone members such as the humerus member, the scapula member, the member of the middle finger on right hand and the radius member were used as the bone member in the above embodiments, but not limited thereto, and this bone member can be applied to almost all the bones. In addition, at least one bone member of the present invention includes one bone member constituting a joint (a bone member having a shape of two or more bones coupled to one another), but it is preferred that the number of the bone members is two or more, because an actual human muscle is fixed to two bones.

Moreover, in the above embodiment, the supraspinatus member, the infraspinatus member and the teres minor member, as well as the common digital extensor tendon member, the superficial digital flexor tendon member, the deep digital flexor tendon member and biceps brachii member were used as the muscle member, but not limited thereto, and the muscle member can be applied to almost all the skeletal muscles. In addition, the muscle member includes tendons, depending on the type of the muscle.

In addition, in the above embodiments, different regions of a human body were explained individually, but the first to third embodiments can be combined. Namely, by using the first to third embodiments as well as bone members and muscle members other than the ones of the first to third embodiments on a human model having bone members of a whole human body, the entire human model can be a training aid. In addition, only a part of a human body such as only an upper limb part, only a lower limb part and only a body trunk part can be a training aid, as well.

### Explanation of Symbols

- 1: Training aid
- 2: Bone member
- 3: Muscle member
- 3a: Long head
- 3b: Short head
- 10, 60: Scapula member
- 11, 80: Humerus member
- 15: Supraspinatus member
- 16: Infraspinatus member
- 17: Teres minor member
- 20, 50, 90, 91, 92, 93: Origin magnet member
- 21: Origin member
- 22, 52, 94: Insertion magnet members
- 23, 53: Insertion members
- 25: Ring magnet
- 30: Attaching panel
- 35: Screw
- 36: Magnet
- 37: Screw
- 38: Magnet
- 40: Bone member of middle finger on right hand
- 45: Common digital extensor tendon member
- 46: Superficial digital flexor tendon member
- 47: Deep digital flexor tendon member
- 61: Supraglenoid tubercle
- 62: Coracoid process
- 70: Radius member
- 71: Radial tuberosity

## Claims

1. A training aid for learning muscles comprising at least one bone member and at least one muscle member attached at its origin and insertion removably to the bone member by the magnetic force of a magnet.

2. The training aid according to claim 1, wherein the muscle member has a shape similar to a human muscle and the bone member has a shape similar to a human bone.

3. The training aid according to claim 1 or 2, wherein either one of the origin of the muscle member and the bone member connected to the origin is provided with a magnet, while the other one is provided with a ferromagnet attracted to the magnet or a magnet attracting and attracted to the magnet, and
either one of the insertion of the muscle member and the bone member connected to the insertion is provided with a magnet, while the other one is provided with a ferromagnet attracted to the magnet, or a magnet attracting and attracted to the magnet.

4. The training aid according to any one of claims 1-3, wherein the training aid is further provided with a attaching panel, the attaching panel provided with ferromagnets attracted to the magnets at the origin and insertion of the muscle member or magnets attracting and attracted to the magnets, or magnets attracting the ferromagnets at the origin and insertion.

5. The training aid according to claim 4, wherein the attaching panel has an illustrated muscle thereon corresponding to the muscle member, the muscle member attached to the attaching panel at its origin and insertion in a manner to match the illustrated muscle on the attaching panel.

6. A training method for muscles using the training aid according to any one of claims 1-5.
